(19) Europäisches Patentamt

European Patent Office

Office européen des brevets

(11) **EP 1 612 984 B1**

(12) **EUROPEAN PATENT SPECIFICATION**

(45) Date of publication and mention
of the grant of the patent:
**25.01.2012 Bulletin 2012/04**

(21) Application number: **05105792.5**

(22) Date of filing: **29.06.2005**

(51) Int Cl.:
***H04L 1/18*** *(2006.01)*

(54) **Terminal memory management for hybrid ARQ**

Endgerät mit Speicherverwaltung für hybrides ARQ

Terminal avec gestion de mémoire pour un ARQ hybride

(84) Designated Contracting States:
**DE FR GB IT**

(30) Priority: **01.07.2004 JP 2004195548**

(43) Date of publication of application:
**04.01.2006 Bulletin 2006/01**

(73) Proprietor: **NEC Corporation
Minato-ku
Tokyo 108-8001 (JP)**

(72) Inventor: **Yagihashi, Ayumu
Tokyo 108-8001 (JP)**

(74) Representative: **Betten & Resch
Patentanwälte
Theatinerstrasse 8
80333 München (DE)**

(56) References cited:
**WO-A-2004/015906      WO-A-2004/042993**

**Description**

BACKGROUND OF THE INVENTION

1. Field of the Invention:

The present invention relates to a mobile radio communication terminal device that uses HSDPA technology that is provided with a repeat function on the MAC (Media Access Control) layer, and more particularly to a memory control method for controlling a memory for storing packet data in MAC-hs units that are received.

2. Description of the Related Art:

A W-CDMA (Wideband Code Division Multiple Access) communication system based on the 3GPP (3rd Generation Partnership Project) in which standardization is currently progressing, makes use of protocol layers made up from of a plurality of layers, including the RRC (Radio Resource Control) layer, RLC (Radio Link Control) layer, MAC (Media Access Control) layer, and Physical (PHY) layer, as disclosed in Japanese Patent Laid-Open Publication No. 2002-026991.

When a layer-structured protocol of this type is used, data of a base station is transferred from the RLC layer to the MAC layer and transmitted to mobile stations by way of radio lines. In the mobile stations, a reverse process is carried out in which the data that have been received are transferred from the MAC layer to the RLC layer. The data processing units are determined in each layer, and these data processing units are referred to as RLC PDU units on the RLC layer and MAC PDU on the MAC layer.

HSDPA (High-Speed Downlink Packet Access) has been proposed as a technology for realizing high-speed downlink in this type of W-CDMA communication system.

A new MAC-hs processing function has been added in the MAC layer in HSDPA, and processing units known as MAC-hs PDU have taken the place of MAC PDU as the processing units in this processing.

An important characteristic of HSDPA is the provision of a repeat function in the MAC layer. The repeat function was conventionally performed only in the RLC layer, and the provision of this function in the MAC layer, which is closer to the Physical layer than the RLC layer, is directed toward achieving a major improvement in throughput. As the basic operation, the repeat function in the MAC layer operates for data that have failed in decoding, and the repeat function in the RLC layer operates for data that have further failed in decoding in the MAC layer repeat function.

The repeat function that is a new function in the MAC layer is made up from a HARQ (Hybrid Auto Repeat reQuest) process that realizes a repeat function and a reordering process for controlling this repeat function.

The HARQ process performs a process of holding rather than discarding data for which a decoding failure has occurred in the mobile radio communication terminal device and combining the data with data that are resent. This process is directed toward shortening the time required for successful transmission following a decoding failure.

On the other hand, when the reception sequence in the MAC layer within a mobile radio communication terminal device and the transmission sequence in the MAC layer within a base station have changed due to the HARQ process, the reordering process performs a process of returning the reception sequence to the transmission sequence on the original base station side. When returned to the original transmission sequence, the data are then transferred from the MAC layer to the RLC layer. This reordering process is disclosed in, for example, Japanese Patent Laid-Open Publication No. 2003-318800. The process of returning to the original transmission sequence entails waiting for a certain interval for the completion of received data, this being the time required for success in the decoding of the received data that have failed in decoding in the HARQ process. The repeat function on the RLC layer therefore aims at a reduction of the number of repeat operations on the RLC layer.

Realizing this operation of waiting for the reception of data necessitates a new memory for storing data that have already been received. In 3GPP, this memory is prescribed in 3GPP TS25.306 (v5.7.0). According to these standards, it is proposed that a MAC-hs (high speed) reordering buffer (hereinbelow referred to as "MAC-hs buffer") be provided as a new memory in the MAC layer, and further, that this MAC-hs buffer be combined with the Total RLC AM buffer (hereinbelow referred to as "RLC buffer") as the memory that is conventionally provided in the RLC layer to be a shared single physical memory. In this case, "RLC buffer" is a collective term that combines the DL RLC AM buffer that is required in downlink and the UL RLC AM buffer that is required in uplink.

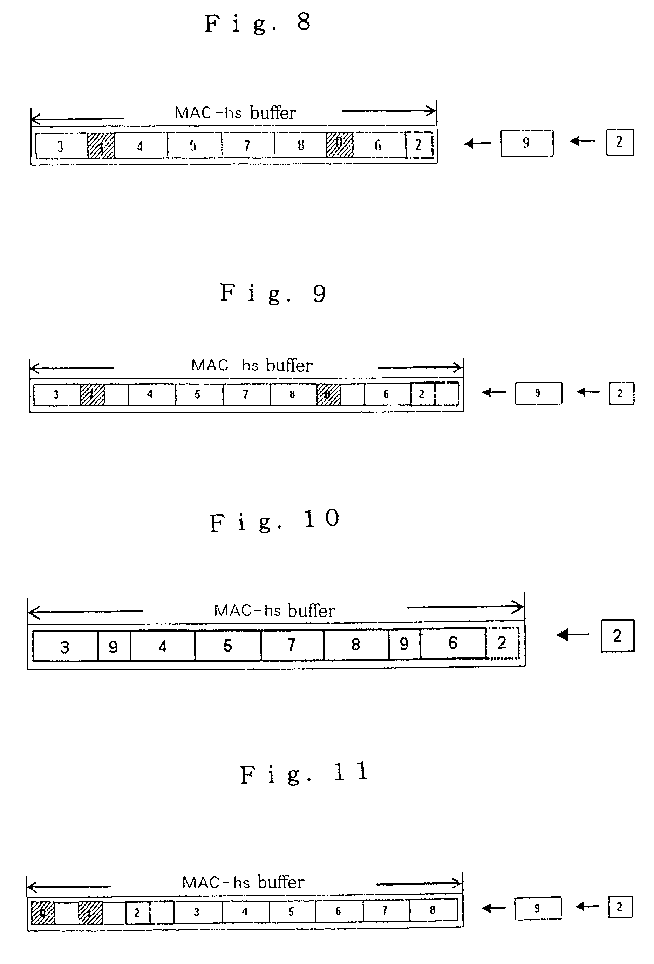

Transfer is realized by the "MAC-hs PDU" data units from HARQ processing blocks to the MAC layer, and the data size of these MAC-hs PDU is characterized by variable length. Typical control methods for storing these data of variable length in the MAC-hs buffer include the methods shown in Figs. 8 and 9.

Fig. 8 shows a case of packaging by a method of storage in which data are simply packed into memory in the order of actual transfer from HARQ processing blocks, and Fig. 9 shows a case of packaging by a method in which data are always assigned to memory areas having the maximum data length without regard to the data length of data that are actually transferred from the HARQ processing blocks. The numerals that are used in Fig. 8 and Fig. 9 are referred to as TSN (Transmission Sequence Number) and are numbers assigned in order for each MAC-hs PDU (Protocol Data Unit), which is the unit by which the MAC layer of the base station processes, and the numbered boxes indicate MAC-hs PDU. In Fig. 8, the boxes shaded by slanted lines indicate that the MAC-hs PDU has already been transferred to the RLC buffer, and the boxes that accompanying the arrows directed from the right toward the left indicate the MAC-hs PDU that are next transmitted from the base station and received by a mobile station considering the size of vacancy of the MAC-hs buffer.

The method of Fig. 8 is used for packing memory and therefore has the advantage of allowing the packaging of the minimum amount of memory. However, as shown in Fig. 10, there is a possibility for a case in which one particular MAC-hs PDU is divided and stored in each of vacant and physically separated memory areas as memory space in Fig. 8, and this case therefore entails the disadvantage that a complicated control is required for this process. For example, in the example shown in Fig. 10, it can be seen that packet data of MAC-hs PDU units for which TSN = 9 has been divided and stored in two separated locations.

In addition, in the method of Fig. 9, the maximum data length of memory is always used for MAC-hs PDU regardless of the size and this method therefore has the disadvantage that considerably more redundant memory is required than the method of Fig. 8. However, control in this method does not require the complex control such as in Fig. 8, and this method therefore offers the advantage allowing a simplification of control. For example, as shown in Fig. 11, a method can be conceived in which memory addresses are assigned in advance for each TSN, and the ease of control can be clearly seen in this example.

The variable data length of the processing units therefore brings about the problem that, in memory control methods for a MAC-hs buffer of the prior art, reducing the amount of memory to a minimum entails a complication of the memory control, while on the other hand, simplifying the method entails an increase in the amount of memory.

Moreover, when the MAC-hs buffer and the RLC buffer are to be realized as one physical memory, the difference in data size between packet data in MAC-hs PDU units and packet data in RLC PDU units complicates the easy realization of the MAC-hs buffer and RLC buffer in one physical memory.

Further, as described above, packet data are transferred from the MAC layer to the RLC layer when a reordering process is completed in the MAC layer in the prior art, and as a consequence, there arises the problem that the occurrence of an RLC repeat request during the reordering process on the MAC layer is a pointless request and results in the performance of an unnecessary repeat request.

The unnecessary repeat request is a problem that lies in the 3GPP-based HSDPA communication system itself. This problem can occur in a case in which the RLC PDU by which the RLC layer of the mobile station sends a repeat request to the base station side is repeated from the base station, and, even though received by the MAC layer of the mobile station, the RLC PDU has still not been transferred to the RLC layer of the mobile station due to the reordering process. When the RLC layer of the mobile station determines that this RLC PDU has not been received in this state, another repeat request is submitted for the RLC PDU. The RLC PDU that has already been received in the MAC layer of the mobile station is again transmitted by downlink, resulting in the overuse of the downlink resources.

In short, the above-described mobile radio communication terminal device of the prior art suffers from the following problems:

1) When packet data of MAC-hs PDU units are stored in a MAC-hs buffer, the packet data of MAC-hs PDU units are of variable length, whereby a choice must be made between using a complicated control method and increasing the amount of memory.

2) Packet data of MAC-hs PDU units and packet data of RLC PDU units have differing data size, and the MAC-hs buffer and RLC buffer are therefore difficult to realize as a single physical memory.

3) In the event of a RLC repeat request during the reordering process on the MAC layer, the RLC repeat request is unnecessary.

WO 2004/015906 A2 allows for effective sharing of the memory of a wireless transmit/receive unit among the MAC reordering and the RLC buffers.

SUMMARY OF THE INVENTION

It is an object of the present invention to provide a mobile radio communication terminal device and memory control method that allow the realization of a MAC-hs buffer and a RLC buffer as one physical memory when packet data in MAC-hs PDU units are to be stored in a MAC-hs buffer, and moreover, that enable a suppression of the increase in memory capacity without necessitating the use of a complicated control method.

It is another object of the present invention to provide a mobile radio communication terminal device that can minimize unnecessary RLC repeat requests and thus realize an improvement in the throughput of an HSDPA downlink.

The present invention is applied to a mobile radio communication terminal device that uses HSDPA technology that is provided with a repeat capability in the MAC layer.

To achieve the above-described objects, the mobile radio communication terminal device according to the present invention is provided with: a MAC-hs processor, a shared memory, a shared memory control device, and an RLC processor.

The MAC-hs processor separates packet data of MAC-hs PDU units for which decoding has been determined to be successful in a layer-1 HARQ process into packet data of RLC PDU units, which are the data processing units in the RLC layer; and supplies the data as output together with sequence number information and transfer advisability information that indicates whether a reordering process of packet data that have separated into RLC PDU units has been completed.

The shared memory is one physical memory that functions as a MAC-hs buffer for storing packet data of MAC-hs PDU units and an RLC buffer for storing packet data of RLC PDU units.

The shared memory control device implements memory control for:

assigning memory addresses of the shared memory by RLC PDU units in advance; placing memory addresses that have been assigned in correspondence with RLC PDU sequence numbers and attaching labels; writing packet data of RLC PDU units that have been received as input from the MAC-hs processor to corresponding memory addresses of the shared memory; and reading and transferring packet data in the shared memory only when the transfer advisability information from the MAC-hs processor indicates that transfer is possible.

The RLC processor performs RLC-layer processing upon packet data that have been transferred in from the shared memory control device.

According to the present invention, packet data of MAC-hs PDU units are separated in a MAC-hs processor into RLC PDU, which is of a fixed-unit length, and then stored in the memory; following which control is implemented using transfer advisability information to determine whether the separated RLC PDU have been placed under the control of a MAC layer by means of a HARQ process and reordering process or placed under the control of the RLC layer upon completion of the series of processes in the MAC layer; whereby a MAC-hs buffer and an RLC buffer can be realized as a single physical memory.

In addition, the MAC-hs processor may be made up from:

a MAC-hs header elimination device for removing the MAC-hs header portion from packet data of MAC-hs PDU units that have been received as input and supplying as output the MAC-hs header information that has been removed and the remaining packet data from which the MAC-hs headers have been removed;

a padding bit elimination device for removing the padding bits from the packet data that have been supplied as output from the MAC-hs header elimination device based on a padding bit number that has been reported in advance and supplying as output the remaining packet data from which the padding bits have been removed;

an RLC PDU separation device for separating packet data that have been supplied as output from the padding bit elimination device into a plurality of packet data of RLC PDU units based on a RLC PDU number that has been reported in advance and both supplying as output the plurality of packet data of RLC PDU units that have been separated to the shared memory control device and recognizing sequence number information based on the header information of each item of packet data of the RLC PDU units that have been separated and supplying the result as output;

a header register for storing MAC-hs header information; and

a MAC-hs control device for: based on the data length of packet data of MAC-hs PDU units that have been received as input and on the RLC PDU size that has been set in advance, calculating a padding bit number that is contained in the packet data of MAC-hs PDU units that have been received as input and the RLC PDU number, which is the number of items of packet data of RLC PDU units that are contained in packet data of MAC-hs PDU units; supplying the padding bit number that has been calculated as output to the padding bit elimination device; supplying the RLC PDU number as output to the RLC PDU separation device; of MAC-hs header information that has been transmitted in from the MAC-hs header elimination device, storing MAC-hs header information that must be held in the header register in correspondence with sequence number information that has been reported from the RLC PDU separation device and carrying out a reordering process; making the transfer advisability information "transfer not possible" for packet data of RLC PDU units for which the reordering process is not completed; making the transfer advisability information "transfer possible" for packet data of RLC PDU units for which the reordering process has been completed, and supplying these packet data to the shared memory control device.

Further, in another mobile radio communication terminal device of the present invention, when packet data of RLC PDU units for which a repeat request has been transmitted in the RLC layer are undergoing a reordering process in the MAC layer, the MAC-hs control device may change the transfer advisability information from "transfer not possible" to "transfer permitted" for the packet data of RLC PDU units; and

in the RLC processor, settings may be made such that a repeat request is not transmitted for packet data of RLC PDU units for which the transfer advisability information has been changed to "transfer permitted," and such that the transfer of packet data of RLC PDU units to the shared memory control device is requested according to necessity.

According to the present invention, when packet data of RLC PDU units for which a repeat request has been transmitted in the RLC layer is in the reordering process on the MAC layer, the MAC-hs control device changes the transfer advisability information from "transfer not possible" to "transfer permitted" and notifies the RLC processor that a repeat request is not necessary, whereby the pointless RLC repeat requests in the prior art can be eliminated and the throughput of the HSDPA downlink can be improved.

The above and other objects, features, and advantages of the present invention will become apparent from the following description with reference to the accompanying drawings, which illustrate examples of the present invention.

BRIEF DESCRIPTION OF THE DRAWINGS

Fig. 1 shows the configuration of typical packet data of MAC-hs PDU units;

Fig. 2 shows the relation between RLC PDU and MAC-hs PDU when MAC multiplexing does not occur;

Fig. 3 is a block diagram showing the configuration of a mobile radio communication terminal device according to an embodiment of the present invention;

Fig. 4 shows a table for a case in which memory addresses of shared memory 103 are assigned in RLC PDU units and placed in correspondence with the SN of RLC and labels attached in the order of the most recent assigned memory addresses;

Fig. 5 shows a table for a case in which the labeling of memory addresses of shared memory 103 is reassigned;

Fig. 6 shows a table for another case in which the labeling of memory addresses of shared memory 103 is reassigned;

Fig. 7 shows the relation between RLC PDU and MAC-hs PDU when MAC multiplexing occurs;

Fig. 8 is a view for explaining the memory control method of the prior art in which data that are transferred in are stored by packing in memory;

Fig. 9 is a view for explaining the memory control method of the prior art in which memory areas of the maximum data length are always assigned to data that are transferred in;

Fig. 10 is a view for explaining a memory control method of the prior art in which data that are transferred in are packed to achieve the minimum amount of memory; and

Fig. 11 is a view for explaining the memory control method of the prior art in which memory addresses are assigned in advance for each TSN.

DETAILED DESCRIPTION OF THE PREFERRED EMBODIMENTS

Before describing the embodiment of the present invention, the following explanation first regards an outline of the present invention.

When HSDPA is added to a W-CDMA communication system based on the 3GPP as described hereinabove, a MAC-hs buffer is added as new memory in the MAC layer. However, the MAC-hs PDU that are the processing data units that are stored in this memory are of variable length, and as a result, there arises the problem that limiting the MAC-hs buffer to the minimum size necessitates a complex and difficult memory control method.

The present invention provides a solution to the above-described problem by focusing on the fact that the RLC PDU, which are the processing data units in the RLC layer, are not of variable length but are a uniform fixed length when MAC multiplexing does not occur, and moreover, when the SID (Size index IDentifier) of the RLC PDU Is of only one type.

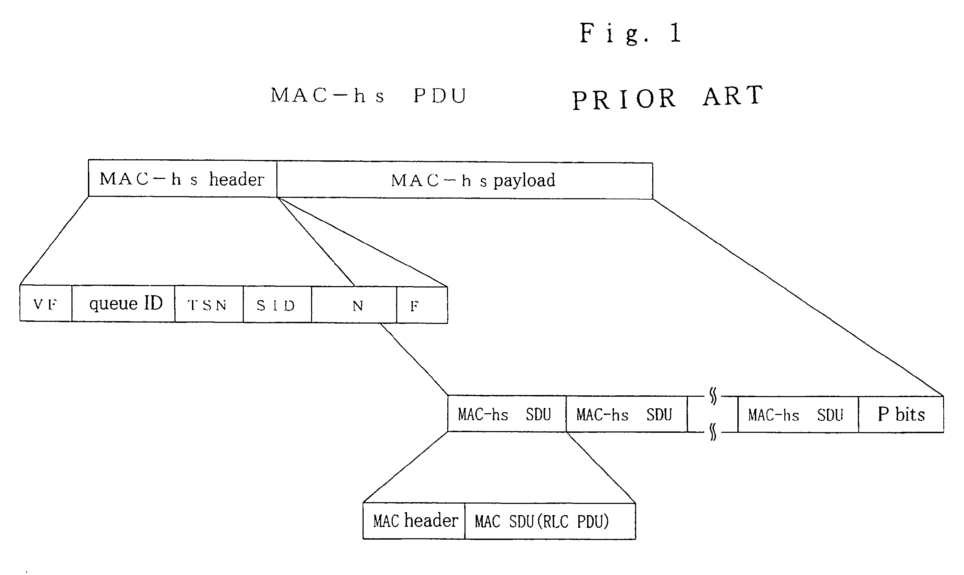

The following explanation first regards the typical configuration of packet data of MAC-hs PDU units with reference to Fig. 1.

As shown in Fig. 1, packet data of MAC-hs PDU units is composed of a MAC-hs header and a MAC-hs payload.

As shown in Fig. 1, the MAC-hs header is made up from: a one-bit version flag (VF), a three-bit queue ID, a six-bit TSN (Transmission Sequence Number), a three-bit SID, a seven-bit MAC-hs SDU (Service Data Unit) number (N), and a one-bit flag F.

The version flag (VF) is a flag for determining the version of the protocol. The queue ID is an ID for specifying the reordering queue in which the packet data of MAC-hs PDU units are stored. The TSN indicates the transmission number of each item of packet data of MAC-hs PDU units that are the standard in the reordering process in the MAC layer. The SID indicates the MAC-hs SDU size within the MAC-hs SDU set. In this case, the MAC-hs SDU set refers to a collected group of MAC-hs SDU of MAC-hs SDU in the MAC-hs payload that are continuous, and moreover, of the same size. The MAC-hs SDU number (N) indicates the number of MAC-hs SDU in the MAC-hs SDU set that is shown by SID. Finally, flag F indicates the type of data that continues next and indicates whether another SID or the MAC-hs payload comes next.

When the SID is not of one type, the combination of SID, MAC-hs SDU number (N), and flag F is repeated for the number of types of SID, and the data length of the MAC-hs header is therefore not a fixed value. However, in the case of only one type of SID as is presupposed in the present invention, only one set of the combination of SID, MAC-hs SDU number (N), and flag F exists in the MAC-hs header, and the data length of the MAC-hs header is therefore a fixed length of 1+3+6+3+7+1=21 bits. The MAC-hs header can therefore be removed by removing the first 21 bits from the start of packet data of MAC-hs PDU units that have been received as input.

The MAC-hs payload is made up from a plurality of items of packet data of MAC-hs SDU units and padding bits (P bits). The packet data of MAC-hs SDU units are made up from a MAC header and packet data of MAC SDU units. Finally, the packet data of MAC SDU units and packet data of RLC PDU units are the same data. This is because the meaning carried by the data differs in the MAC layer and RLC layer, and even the same data will be SDU in the MAC layer and PDU in the RLC layer.

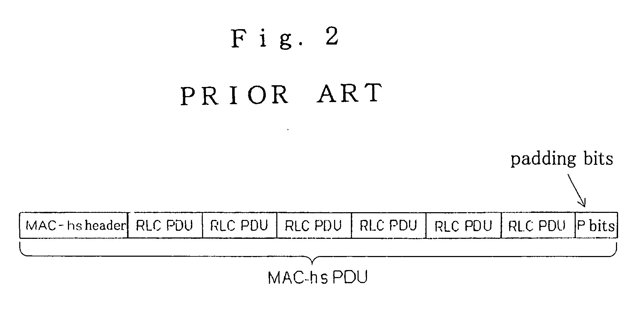

Fig. 2 shows the relation between RLC PDU and MAC-hs PDU when MAC multiplexing does not occur and the SID of the RLC PDU is of only one type.

In this case, MAC multiplexing refers to a case in which a plurality of types of logical channels is present within packet data of one MAC-hs PDU unit, which is one TTI (Transmission Time Interval). When this MAC multiplexing occurs, four-bit information referred to as "C/T" for specifying the logical channel number for each item of packet data of RLC PDU units that is the MAC SDU is added as a MAC header. In such a case:

$$\text{MAC-hs SDU} = \text{RLC PDU} + \text{MAC header (C/T field)}$$

and

$$\text{MAC-hs SDU} = \text{RLC PDU}$$

no longer holds true. However, when it is presumed that MAC multiplexing will not occur, the MAC header is unnecessary, and RLC PDU and MAC-hs SDU coincide.

As a result, when it is assumed that MAC multiplexing does not occur, the packet data of MAC-hs PDU units will each be made up from a MAC-hs header, a plurality of items of packet data in RLC PDU units, and padding bits (P-bits), as shown in Fig. 2.

The invention of the present application is provided with the three characteristics 1-1, 1-2, and 2 described below:

1-1) When a mobile station stores MAC-hs PDU in the MAC-hs buffer, the MAC-hs PDU are separated into RLC PDU, which are the data processing units on the RLC layer, and are stored by packing into the MAC-hs buffer in RLC PDU units.
1-2) Status is used to control whether the RLC PDU that have been separated are then to be placed under the control of the MAC layer by means of the HARQ process or reordering process or placed under the control of the RLC layer after completing a series of processing on the MAC layer.
2) When the MAC layer of the mobile station determines, for RLC PDU that it controls in shared memory, that it holds RLC PDU that are being repeated in the RLC layer, the MAC layer of the mobile station notifies the RLC layer that it is holding these RLC PDU.

Characteristics 1-1 and 1-2 are not characteristics that influence or are influenced by characteristic 2, each of these characteristics being independent. Characteristic 1-1 allows storage of data by data units of fixed length in memory and can facilitate the memory control as shown in Fig. 9. In addition, packet data of MAC-hs PDU units are separated into packet data of RLC PDU units and then stored by packing and can therefore realize the minimum amount of memory, as shown in Fig. 8.

Characteristic 1-2 facilitates sharing on the MAC layer and RLC layer, and can therefore facilitate the configuration of the MAC-hs buffer and RLC buffer as one physical memory.

Finally, characteristic 2 allows a reduction of the repeat requests that are unnecessary in the RLC layer and can raise the efficiency of use of the downlink resources.

The present invention therefore has the effects of allowing the configuration of the MAC-hs buffer and RLC buffer as a single physical memory, of minimizing the amount of memory required and facilitating the control method, and finally, of raising the efficiency of use of the downlink resources.

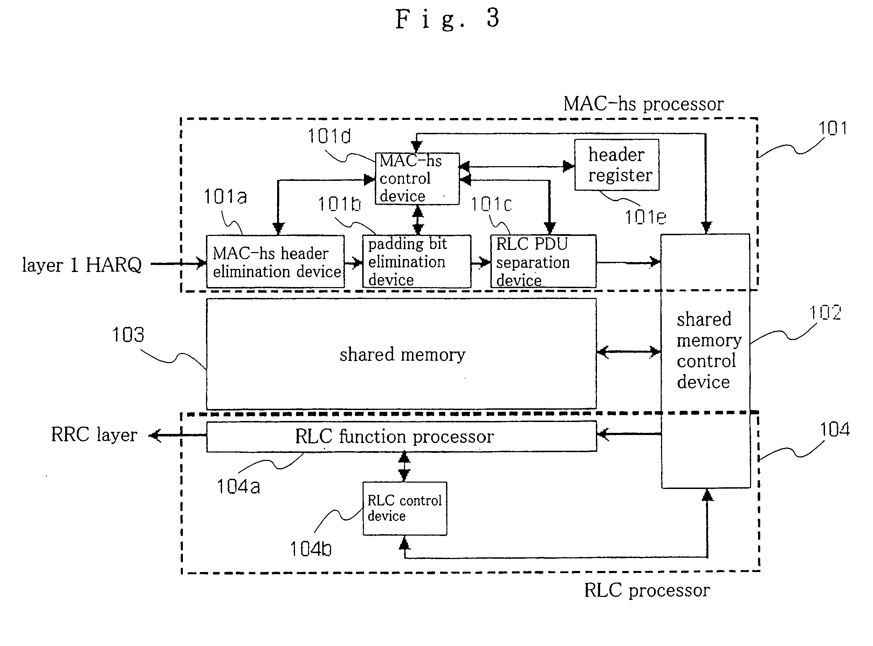

The following explanation regards the details of the embodiment of the present invention with reference to the accompanying figures. Fig. 3 shows the configuration of a mobile radio communication terminal device according to an embodiment of the present invention for realizing the memory control method described above.

As shown in Fig. 3, the mobile radio communication terminal device of the present embodiment is provided with MAC-hs processor 101, shared memory control device 102, shared memory 103, and RLC processor 104.

MAC-hs processor 101 receives as input packet data of MAC-hs PDU units for which the layer-1 HARQ process has succeeded, and executes a reordering process and a disassembly process, which are functions within the MAC layer that are specifically directed to HSDPA communication. More specifically, MAC-hs processor 101 separates packet data of MAC-hs PDU units, for which it is determined that decoding was successful in the layer-1 HARQ process, into packet data of RLC PDU units, these being the data processing units on the RLC layer, and supplies these packet data together with SN (Sequence number) as output to shared memory control device 102. MAC-hs processor 101 further supplies transfer advisability information that indicates whether the reordering process has been completed for the packet data that have been separated into RLC PDU units to shared memory control device 102 together with the packet data of RLC PDU units.

Shared memory control device 102 implements overall memory control, which includes writing the packet data of RLC PDU units that have been received as input from MAC-hs processor 101 to corresponding memory addresses, reading the packet data in shared memory 103 in response to requests from RLC processor 104, and transferring the read packet data to RLC processor 104. More specifically, shared memory control device 102 performs memory control for assigning the memory addresses of shared memory 103 to RLC PDU units in advance, placing the assigned memory addresses in correspondence with the SN of RLC PDU and attaching labels, writing the packet data of RLC PDU units that have been received as input from MAC-hs processor 101 to corresponding memory addresses of shared memory 103, and, in response to requests from RLC processor 104, reading and transferring the packet data in shared memory 103.

Shared memory 103 is a single physical memory that functions as a MAC-hs buffer for storing packet data of MAC-hs PDU units and a RLC buffer for storing packet data of RLC PDU units.

RLC processor 104 performs RLC-layer processing for packet data that have been transferred in from shared memory control device 102 and supplies the result to the RRC (Radio Resource Control) layer.

In the interest of simplifying the explanation in the present embodiment, shared memory 103 is described as a component that is composed of only a MAC-hs buffer and a DL RLC AM buffer.

MAC-hs processor 101 is composed of: MAC-hs header elimination device 101 a, padding bit elimination device 101 b, RLC PDU separation device 101 c, MAC-hs control device 101 d, and header register 101 e.

MAC-hs header elimination device 101 a removes the MAC-hs header portion from packet data of MAC-hs PDU units for which it is determined that decoding was successful in the HARQ process and that have been received as input, and then both reports this information to MAC-hs control device 101 d and supplies the remaining packet data from which the MAC-hs header has been removed as output to padding bit elimination device 101 b.

Based on the padding bit number that has been reported in advance from MAC-hs control device 101 d, padding bit elimination device 101 b removes padding bits from packet data that have been received as input from MAC-hs header elimination device 101 a and supplies the remaining packet data from which the padding bits have been removed to RLC PDU separation device 101 c.

RLC PDU separation device 101 c separates the packet data that have been supplied as output from padding bit elimination device 101 b into a plurality of items of packet data of RLC PDU units based on an RLC PDU number that has been reported in advance from MAC-hs control device 101d, and further, both supplies this plurality of items of packet data of RLC PDU units that have been separated as output to shared memory control device 102 and recognizes each item of the SN (Sequence Number) information based on the header information of each item of packet data of RLC PDU units that have been separated and reports this information to MAC-hs control device 101 d.

MAC-hs control device 101 d exchanges control parameters with each of MAC-hs header elimination device 101 a, padding bit elimination device 101 b, RLC PDU separation device 101 c, and shared memory control device 102; stores the MAC-hs header information that must be held and the SN information of RLC PDU that correspond to this MAC-hs header information in header register 101 e; and performs a reordering process.

More specifically, based on the data length of packet data of MAC-hs PDU units that have been received as input and a RLC PDU size that has been set in advance, MAC-hs control device 101 d calculates the padding bit number that is contained in the packet data of MAC-hs PDU units that have been received as input and the RLC PDU number, which is the number of items of packet data of RLC PDU units that are contained in packet data of MAC-hs PDU units; supplies the padding bit number that has been calculated as output to padding bit elimination device 101 b, and supplies the RLC PDU number as output to RLC PDU separation device 101 c. MAC-hs control device 101d further stores, of the MAC-hs header information that has been transmitted in from MAC-hs header elimination device 101 a, the MAC-hs header information that must be held to header register 101 e in correspondence with the SN information that has been reported from RLC PDU separation device 101 c, and performs a reordering process.

In addition, MAC-hs control device 101 d: makes the transfer advisability information "transfer not possible" for packet data of RLC PDU units for which the reordering process has not been completed; makes the transfer advisability information "transfer possible" for packet data of RLC PDU units for which the reordering process has been completed, supplies the information as output to shared memory control device 102, and, when packet data of RLC PDU units for which a repeat request has been transmitted in the RLC layer are still in the reordering process on the MAC layer, changes the transfer advisability information for these packet data of RLC PDU units from "transfer not possible" to "transfer permitted" and notifies shared memory control device 102.

If there has been a data transfer request from RLC processor 104 for packet data of RLC PDU units for which transfer has been permitted, MAC-hs control device 101 d provisionally carries out the reordering process for these packet data of RLC PDU units. In this case, the provisional reordering process means a reordering process that is not supposed to have been performed because the packet data have already been transferred to the RLC layer. Normally, the transfer of packet data of RLC PDU units to the RLC layer is carried out after the reordering process has been completed for all packet data of RLC PDU units within one MAC-hs PDU unit. In the present embodiment, however, the packet data of one RLC PDU unit are transferred to the RLC layer before the completion of the reordering process with the object of reducing repeat requests, and a reordering process must be carried out that includes packet data of RLC PDU units that have been transferred to the RLC layer in order to complete the reordering process. The above-described provisional reordering process therefore becomes necessary.

When the transfer of packet data of RLC PDU units for which the transfer advisability information was "transfer permitted" has been carried out in accordance with a data transfer request from RLC processor 104, MAC-hs control device 101 d next changes the transfer advisability information of the packet data of RLC PDU units from "transfer permitted" to "transfer not possible."

Header register 101 e is a register that is used by MAC-hs control device 1 01 d for storing MAC-hs header information.

RLC processor 104 is made up from: RLC function processor 104a for performing RLC processing upon RLC PDU that have been read from shared memory 103 by way of shared memory control device 102 and supplying the processed data as output to the RRC layer; and RLC control device 104b for exchanging control parameters with RLC function processor 104a and shared memory control device 102.

In RLC processor 104, when a repeat request for the packet data of a particular RLC PDU unit is transmitted and the transfer advisability information from shared memory control device 102 for these packet data of RLC PDU units has been changed to "transfer permitted," the repeat request for these packet data of RLC PDU units is recognized as unnecessary, and a request for the transfer of these packet data of RLC PDU units is submitted to shared memory control device 102 according to necessity. RLC processor 104 then requests shared memory control device 102 for the transfer of these packet data of RLC PDU units for which the transfer advisability information has been changed to "transfer permitted."

The following explanation regards the operation of the mobile radio communication terminal device of the present embodiment with reference to Fig. 3.

It is first assumed that in the present embodiment, MAC multiplexing does not occur. It is further assumed that before the start of operation of the present embodiment, the RLC PDU size and initial parameters that are required for the reordering process are reported to MAC-hs control device 101d, the RLC PDU size is reported to shared memory control device 102, the RLC PDU size and initial parameters that are required for the RLC process are reported to RLC control device 104b, and that these settings reports serve as the activation trigger for each of these devices and the initial parameter values of each device thus set. It is assumed that these parameter values, once set, do not change until a reset operation occurs. It is further assumed that a RLC reception status value is reported to shared memory control device 102 with each initialization, and the initial values are all set for the SN as "reception completed."

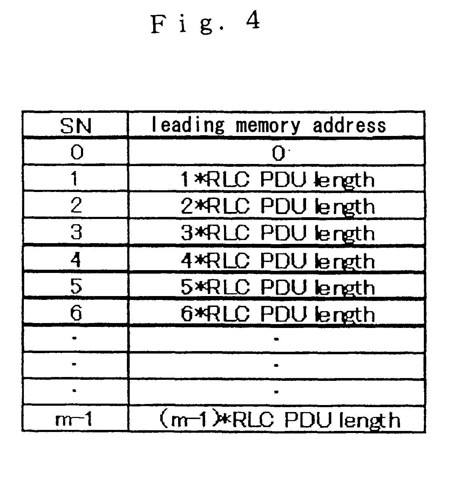

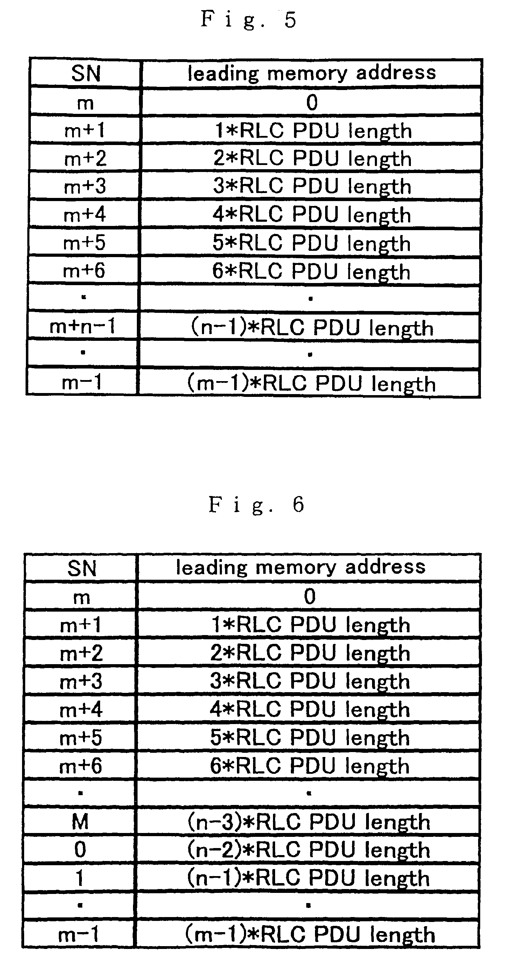

As shown in Fig. 4, shared memory control device 102, upon initially receiving notification of the RLC PDU size, assigns memory addresses of shared memory 103 by RLC PDU units, and then places the SN of RLC, starting in order from the most recent, in correspondence with these assigned memory addresses in shared memory 103 starting in order from the most recent address, and attaches labels. At this time, when the last value SN=m-1 that has been assigned in shared memory 103 surpasses value M, which is the maximum value of SN, the SN is again set to SN=0 starting from the SN that exceeded the value and labels assigned in order. When MAC-hs processor 101 has received an RLC PDU indicating value SN=(m+n-1) that is greater than the maximum value SN=m-1 that has been assigned to shared memory 103 as shown in Fig. 5, the labeling of memory addresses is reset from SN=0 to SN=m, and the labeling of corresponding memory addresses is resumed in the same way by again assigning labels to values in which SN increases by m until SN=m+n-1. At this time, when SN=m+n-1 exceeds value M, which is the maximum value of SN as shown in Fig. 6, SN is again made SN=0 starting from the SN that exceeded value M and labels are again assigned in order. Fig. 6 shows a case in which SN=m+n-1 = M+2.

The following explanation regards the details of the operation of the mobile radio communication terminal device of the present embodiment with reference to the figures for each step.

(1) First, when it has been determined that decoding of the packet data of a particular MAC-hs PDU unit has succeeded in the layer-1 HARQ process, the data length of that MAC-hs PDU is reported to MAC-hs control device 101d.

(2-1) Upon receiving this report, MAC-hs control device 101d next activates MAC-hs header elimination device 101a, padding bit elimination device 101b, and RLC PDU separation device 101c.

(2-2) MAC-hs control device 101d then, based on the RLC PDU size that has been set in advance and the data length of the packet data of MAC-hs PDU units that have been received as input, calculates the padding bit number of the packet data of MAC-hs PDU units that have been received as input and the RLC PDU number, and reports these values to padding bit elimination device 101b and RLC PDU separation device 101c, respectively.

More specifically, MAC-hs control device 101d subtracts the MAC-hs header portion of a determined number of bits from the data length of packet data of MAC-hs PDU units that have been received as input and divides by the RLC PDU size to calculate the RLC PDU number and the padding bit number. For example, when the data length of the packet data of MAC-hs PDU units is 671 bits, the MAC-hs header is 21 bits, and the RLC PDU size is 100 bits, the calculation of (671-21)/100 yields the quotient 6 as the RLC PDU number and the remainder of 50 bits as the padding bit number.

(3-1) Next, when the packet data of MAC-hs PDU units for which decoding has been determined to be successful in the HARQ process are applied as input to MAC-hs header elimination device 101a which is activated, MAC-hs header elimination device 101a removes the MAC-hs header portion from the leading portion of the MAC-hs PDU data.

(3-2) MAC-hs header elimination device 101a then reports the MAC-hs header information to MAC-hs control device 101d.

(3-3) MAC-hs header elimination device 101a then supplies the remaining data to padding bit elimination device 101b.

(4-1) Padding bit elimination device 101b, upon receiving the input from MAC-hs header elimination device 101a, removes the padding bits from the packet data that have been received as input based on the padding bit number that was reported from MAC-hs control device 101d.

(4-2) After removing the padding bits, padding bit elimination device 101b supplies the remaining data as output to RLC PDU separation device 101c.

(5-1) RLC PDU separation device 101c, upon receiving input from padding bit elimination device 101b, separates the packet data that have been received as input into RLC PDU units.

(5-2) RLC PDU separation device 101c reports to MAC-hs control device 101d the SN of each RLC PDU that has been separated into RLC PDU units.

(5-3) RLC PDU separation device 101c further supplies the packet data of RLC PDU units that have been separated into RLC PDU units as output to shared memory control device 102.

(6-1) MAC-hs control device 101d begins the reordering process upon receiving the MAC-hs header information that has been reported in the above-described Step (3-2).

(6-2) MAC-hs control device 101d establishes correspondence between the TSN and queue number of each of the MAC-hs PDU that are contained in the MAC-hs header information that has been reported from MAC-hs header elimination device 101a in the above-described Step (3-2) and the SN of the RLC PDU that were reported from RLC PDU separation device 101c in Step (5-2), and writes this information that has been placed in correspondence to header register 101e.

(6-3) MAC-hs control device 101d, in synchronization with the input of RLC PDU to shared memory control device 102 in Step (5-3), reports to shared memory control device 102 the SN of the RLC PDU and information regarding the advisability of transfer to RLC processor.

The transfer advisability information in the above-described Step (6-3) is a parameter indicating whether packet data of each RLC PDU unit in shared memory 103 are undergoing processing in MAC-hs processor 101 or undergoing processing in RLC processor 104. Only MAC-hs control device 101 d is able to manipulate this transfer advisability information, RLC processor 104 assuming control if the notification is "transfer possible," and MAC-hs processor 101 assuming control if the notification is "transfer not possible." The additional possibility is that of a notification in which the transfer advisability information is "transfer permitted." This "transfer permitted" indicates that packet data of RLC PDU units for which a repeat request has been transmitted in the RLC layer is undergoing a reordering process in the MAC layer, but because the packet data are already held in shared memory 103, the repeat request for the packet data of RLC PDU units is unnecessary.

The transfer advisability information from MAC-hs control device 101d is reported to shared memory control device 102 according to the following three patterns:

(A) As in the pattern shown in Step (6-3), the notification "transfer not possible" is supplied if the packet data of MAC-hs PDU units to which the packet data of RLC PDU units belong are undergoing a reordering process, and the notification "transfer possible" is supplied if the packet data are not undergoing the reordering process.

(B) In this pattern, for packet data of RLC PDU units in shared memory 103 that are undergoing the reordering process and which therefore are noted "transfer not possible" in pattern A, MAC-hs processor 101, upon determining that the reordering process has been completed, immediately notifies shared memory control device 102 of this completion. In this case, the notification becomes "transfer possible."

(C) In this pattern, when MAC-hs control device 101 d, based on the report from RLC PDU separation device 101 c, determines that packet data of RLC PDU units for which a repeat request has been transmitted from RLC processor 104 are under the control of MAC-hs processor 101, MAC-hs control device 101 d reports this to shared memory control device 102 in the report of Step (6-3). In this case, the notification becomes "transfer permitted," which indicates that the packet data of RLC PDU units for which the repeat request has been transmitted are stored in shared memory 103.

(7-1) When shared memory control device 102 has received packet data of RLC PDU units as input from RLC PDU separation device 101c in Step (5-3) and received the SN of the packet data of RLC PDU units as input from MAC-hs control device 101d in Step (6-3), shared memory control device 102 checks the status of RLC reception information of the SN.

(7-2-1)Shared memory control device 102, upon verifying that the RLC reception information status of the SN is "reception completed," takes the SN as basis and writes packet data of RLC PDU units to the corresponding addresses of shared memory 103 that have been assigned in advance, and changes the RLC reception information status of these packet data of RLC PDU units to "not yet received."

(7-2-2-1) Shared memory control device 102, upon verifying that the RLC reception information status of the SN is "not yet received," temporarily holds packet data that have been received as input in Step (7-1) and the SN, and reports the SN and the transfer advisability information of the SN to RLC control device 104b.

(7-2-2-2) Shared memory control device 102 performs processing of the SN and packet data that were temporarily held in Step (7-2-2-1) in accordance with the instructions from RLC control device 104b that has received notification in Step (7-2-2-1).

(8-1) From the time of activation of shared memory control device 102, RLC processor 104b periodically requests new transfer advisability information for each item of packet data of RLC PDU units that exist in shared memory 103.

(8-2) RLC control device 104b requests shared memory control device 102 for the output of packet data of RLC PDU units for which, of the transfer advisability information, the status of the transfer advisability information has newly changed to "transfer possible" or "transfer permitted."

When the transfer advisability information has attained the status of "transfer permitted," RLC control device 104b does not perform a repeat request for packet data of RLC PDU units for which the transfer advisability information has become "transfer permitted."

Normally, repeat requests in the RLC layer are repeated at fixed time intervals until the reception of packet data of a particular RLC PDU unit has been verified. In this case, when the first repeat request has been supplied for packet data of a particular RLC PDU unit and MAC-hs control device 101d determines that the packet data of the RLC PDU unit for which the repeat request was supplied are undergoing the reordering process, MAC-hs control device 101d changes the transfer advisability information that was "transfer not possible" due to the ongoing reordering process to the status "transfer permitted." As a result, RLC control device 104b, which has received notification of the transfer advisability information "transfer permitted" from shared memory control device 102, can thus ascertain that the reordering process for these packet data of RLC PDU units has not been completed but that the packet data have already been stored in shared memory 103, that there is consequently no need to issue a repeat request on the RLC layer, and can prevent the repeat request from being submitted two or more times.

(9-1) Shared memory control device 102, upon receiving the request of Step (8-2), reads the packet data of RLC PDU units from the corresponding addresses of shared memory 103 that were assigned in advance based on the SN.

(9-2) Shared memory control device 102 then supplies the packet data of RLC PDU units that have been read in Step (9-1) as output to RLC function processor 104a in order beginning from older SN.

(9-3) If RLC control device 104b verifies that RLC function processor 104a has received packet data of RLC PDU units in Step (9-2), reports RLC reception information indicating that these packet data of RLC PDU units have already been received to shared memory control device 102. In this case, the RLC reception information is "reception completed."

(9-4) Shared memory control device 102, upon receiving the report of the RLC reception information of Step (9-3), reflects the status of RLC reception information for these packet data of RLC PDU units.

(10-1) RLC function processor 104a, upon receiving the input of packet data of RLC PDU units in Step (9-2), executes RLC processing.

(10-2) RLC function processor 104a reports information for packet data of RLC PDU units that have been obtained in Step (10-1) to RLC control device 104b.

(10-3) Finally, RLC function processor 104a supplies data for which the RLC processing has been completed to the RRC layer.

According to the mobile radio communication terminal device of the present embodiment, the processing described hereinabove is carried out whereby packet data of MAC-hs PDU units that have been received as input in MAC-hs processor 101 are separated into a fixed unit length referred to as RLC PDU and then stored in shared memory 103, thus enabling a suppression of the increase in memory capacity without entailing complex memory control.

In addition, because packet data of MAC-hs PDU units are separated into a fixed unit length referred to as RLC PDU and then stored in shared memory 103 and, by using transfer advisability information that indicates whether or not the packet data of RLC PDU units are undergoing a reordering process, the packet data of RLC PDU units can be controlled as to whether these packet data of RLC PDU units are under the control of the MAC layer or under the control of the RLC layer, the MAC-hs buffer and RLC buffer can be realized by shared memory 103, which is a single physical memory.

When a repeat request is issued for packet data of a particular RLC PDU unit and the packet data of this RLC PDU unit have already been received and are currently undergoing the reordering process in the MAC layer, MAC-hs control device 101 d changes the transfer advisability information from "transfer not possible" to "transfer permitted" and notifies RLC processor 104 that the repeat request is unnecessary. As a result, RLC control device 104b in RLC processor 104 can recognize that the repeat request for these packet data of RLC PDU units is unnecessary, whereby the pointless RLC repeat requests of the prior art can be eliminated and an improvement in throughput of the HSDPA downlink can be realized.

In the present embodiment, explanation regarded a case in which shared memory 103 was a component for realizing the functions of the MAC-hs buffer and RLC buffer, but the present invention is not limited to this form, and the MAC-hs buffer and RLC buffer may also be realized by memories that are physically separate. In such a case, although the effect of realizing the MAC-hs buffer and RLC buffer as one physical shared memory cannot be obtained, the effect of suppressing increase in the capacity without complicating the memory control of the MAC-hs buffer can be similarly obtained. In the case of such a configuration, a memory control device is used in place of shared memory control device 102, and a memory that functions as the MAC-hs buffer is used in place of shared memory 103.

In the present embodiment, it was assumed that MAC multiplexing does not occur, and moreover, that the SID of RLC PDU is of only one type, i.e., that the RLC PDU length is a fixed length. However, the present invention can be similarly applied even when MAC multiplexing does occur if the SID of RLC PDU is of only one type.

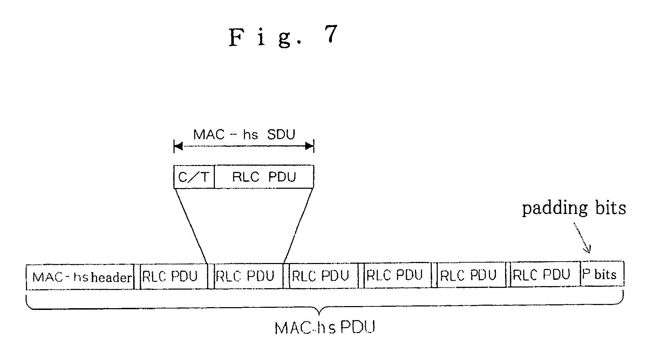

The relation between RLC PDU and MAC-hs PDU when MAC multiplexing occurs is shown in Fig. 7. As described hereinabove, when MAC multiplexing occurs, the MAC-hs SDU is realized by adding a C/T field to the RLC PDU as the MAC header. Since the data size of this C/T field portion is fixed at four bits, the size of the MAC-hs SDU remains unchanged at a fixed length even when MAC multiplexing occurs.

In other words, the present invention can be similarly applied even when MAC multiplexing occurs if memory addresses are assigned at a data length in which the RLC PDU size is increased by the data size of the C/T field instead of assigning the memory addresses of shared memory 103 in RLC PDU units by means of shared memory control device 102.

While a preferred embodiment of the present invention has been described using specific terms, such description is for illustrative purposes only, and it is to be understood that changes and variations may be made without departing from the spirit or scope of the following claims.

An embodiment of the present invention may be summarized as follows:

A mobile radio communication terminal device can suppress increase in memory capacity and realize a MAC-hs buffer and an RLC buffer as a single physical memory. A MAC-hs processor separates packet data of MAC-hs PDU units that are received as input into packet data of RLC PDU units and then supply these data together with sequence numbers to a shared memory control device. A shared memory is a single physical memory that functions as the MAC-hs buffer and the RLC buffer. The shared memory control device assigns memory addresses of the shared memory in RLC PDU units in advance, and writes packet data of RLC PDU units that are applied as input from the MAC-hs processor to the corresponding memory addresses of the shared memory.

**Claims**

1. A mobile radio communication terminal device that uses high-speed downlink packet access, HSDPA, technology that is provided with a repeat function in the medium access control, MAC, layer, said mobile radio communication terminal device comprising:

a MAC-high speed, hs, processor for separating packet data of MAC-hs protocol data units, PDU, units for which decoding was determined to be successful in a layer-1 hybrid auto repeat request, HARQ, process into packet data of radio link control, RLC, PDU units having a fixed unit length, which are the data processing units in the RLC layer; and supplying these data as output together with sequence number information and transfer advisability information that indicates whether a reordering process of packet data that have separated into RLC PDU units has been completed;

a shared memory for MAC and RLC data blocks, which is one physical memory, for functioning as a MAC-hs buffer for storing packet data of MAC-hs PDU units and an RLC buffer for storing packet data of RLC PDU units;

a shared memory control device for implementing memory control for: assigning memory addresses of said shared memory in RLC PDU units in advance; placing memory addresses that have been assigned in correspondence with RLC PDU sequence numbers and attaching said RLC PDU sequence numbers as labels; writing packet data of RLC PDU units that have been received as input from said MAC-hs processor to corresponding memory addresses of said shared memory; and reading and transferring packet data in said shared memory only when said transfer advisability information from said MAC-hs processor indicates that transfer is possible; and

an RLC processor for performing RLC-layer processing upon packet data that have been transferred in from said shared memory control device and for supplying the result as output to the radio resource control, RRC, layer.

2. A mobile radio communication terminal device according to claim 1, wherein:

said MAC-hs processor comprises:

a MAC-hs header elimination device for removing a MAC-hs header portion from packet data of MAC-hs PDU units that have been received as input and supplying as output MAC-hs header information that has been removed and the remaining packet data from which MAC-hs headers have been removed;

a padding bit elimination device for removing padding bits from packet data that have been supplied as output from said MAC-hs header elimination device based on a padding bit number that has been reported in advance and supplying as output the remaining packet data from which padding bits have been removed;

an RLC PDU separation device for separating packet data that have been supplied as output from said padding bit elimination device into a plurality of packet data of RLC PDU units based on an RLC PDU number that has been reported in advance and both supplying as output the plurality of packet data of RLC PDU units that have been separated to said shared memory control device and recognizing sequence number information based on header information of each item of packet data of RLC PDU units that have been separated and supplying the result as output;

a header register for storing MAC-hs header information; and

a MAC-hs control device for: based on the data length of packet data of MAC-hs PDU units that have been received as input and on the RLC PDU size that has been set in advance, calculating a padding bit number that is contained in said packet data of MAC-hs PDU units that have been received as input and an RLC PDU number, which is the number of items of packet data of RLC PDU units that are contained in packet data of MAC-hs PDU units; supplying said padding bit number that has been calculated as output to said padding bit elimination device; supplying said RLC PDU number as output to said RLC PDU separation device; of MAC-hs header information that has been transmitted in from said MAC-hs header elimination device, storing MAC-hs header information that must be held in said header register in correspondence with sequence number information that has been reported from said RLC PDU separation device and carrying out a reordering process; making said transfer advisability information transfer not possible for packet data of RLC PDU units for which the reordering process is not completed; making said transfer advisability information transfer possible for packet data of RLC PDU units for which the reordering process has been completed, and supplying these packet data to said shared memory control device.

3. A mobile radio communication terminal device according to claim 42, wherein:

said MAC-hs control device is provided with a means for, when packet data of RLC PDU units for which a repeat request has been transmitted in the RLC layer are undergoing a reordering process in the MAC layer, changing transfer advisability information from transfer not possible to transfer permitted for the packet data of RLC PDU units; and

said RLC processor is provided with a means for preventing the transmission of repeat requests for packet data of RLC PDU units for which said transfer advisability information has been changed to transfert permitted and for requesting said shared memory control device as necessary for transfer of the packet data of RLC PDU units.

**Patentansprüche**

1. Eine mobile Radiokommunikationsterminal-Vorrichtung, die Hochgeschwindigkeits-Downlink-Paketzugriff HSDPA-Technologie verwendet und mit einer Wiederholungsfunktion in der Medienzugriffssteuer (MAC)-Schicht ausgerüstet ist, wobei die mobile Radiokommunikationsterminal-Vorrichtung aufweist:

   einen MAC-Hochgeschwindigkeits hs -Prozessor zum Separieren von Paketdaten von MAC-hs-Protokolldateneinheits-PDU-Einheiten, für die ein Decodieren als erfolgreich ermittelt wurde in einem Layer-1-Hybrid-Auto-Repeat-Request-HARQ-Vorgang in Paketdaten von Radio-Link-Controll-RLC-PDU-Einheiten mit einer festen Einheitslänge, welche die Datenverarbeitungseinheiten in dem RLC Layer sind; und Liefern dieser Daten als Ausgabe zusammen mit Sequenznummerinformation und Transfer-Zweckmäßigkeitsinformation, die angibt, ob ein Vorgang zum Umordnen von Paketdaten, die in RLC-PDU-Einheiten separiert wurden, vollständig ausgeführt wurde;
   einen geteilten Speicher für MAC und RLC-Datenblöcke, der ein physikalischer Speicher ist, um als ein MAC-hs-Puffer zu arbeiten, zum Speichern von Paketdaten von MAC-hs-PDU-Einheiten und ein RLC-Puffer zum Speichern von Paketdaten von RLC-PDU-Einheiten;
   eine Steuervorrichtung für den geteilten Speicher zum Implementieren einer Speichersteuerung zum: Zuweisen von Speicheradressen des gemeinsamen Speichers in RLC-PDU-Einheiten im Voraus; Platzieren von Speicheradressen, die in Übereinstimmung mit RCL-PDU-Sequenznummern zugewiesen wurden und Anhängen der RLC-PDU-Sequenznummern als Etikette; Schreiben von Paketdaten von RCL-PDU-Einheiten, die als Eingabe von dem MAC-hs-Prozessor empfangen wurden, zu entsprechenden Speicheradressen des geteilten Speichers; und Lesen und Übertragen von Paketdaten in dem geteilten Speicher nur dann, wenn die Transfer-Zweckmäßigkeitsinformation von dem MAC-hs-Prozessor angibt, dass Transfer möglich ist; und
   ein RLC-Prozessor zum Durchführen von RLC-Layer-Verarbeitung auf Paketdaten, die übertragen wurden von der Steuervorrichtung für den gemeinsamen Speicher und zum Liefern des Ergebnisses als Ausgabe an den Radio-Resourcen-Control-RRC-Layer.

2. Eine mobile Radiokommunikationsterminal-Vorrichtung nach Anspruch 1, wobei:

   der MAC-hs-Prozessor aufweist:

   eine MAC-hs-Header-Eliminierungsvorrichtung zum Entfernen eines MAC-hs-Headerteils von Paketdaten von MAC-hs-PDU-Einheiten, die empfangen wurden als Eingabe und zum Liefern als Ausgabe von MAC-hs-Headerinformationen, die entfernt wurden, und der verbleibenden Paketdaten, von denen MAC-hs-Header entfernt wurden;
   eine Padding-Bit-Eliminierungsvorrichtung zum Entfernen von Padding-Bits von Paketdaten, die geliefert wurden als Ausgabe von der MAC-hs-Headereliminierungsvorrichtung basierend auf einer Padding-Bit-Anzahl, die im Voraus berichtet wurde und zum Liefern als Ausgabe der verbleibenden Paketdaten von denen Padding-Bits entfernt wurden;
   eine RLC-PDU-Separarierungsvorrichtung zum Separieren von Paketdaten, die geliefert wurden als Ausgabe von der Padding-Bit-Eliminierungsvorrichtung in eine Vielzahl von Paketdaten von RLC-PDU-Einheiten basierend auf einer RLC-PDU-Anzahl, die Voraus berichtet wurde und wobei beide als Ausgabe die Mehrzahl von Paketdaten von RLC-PDU-Einheiten, die separiert wurden, an die Steuervorrichtung für den gemeinsamen Speicher liefern und Sequenznummerinformationen erkennen basierend auf Headerinformationen von jedem Bestandteil von Paketdaten von RLC-PDU-Einheiten, die separiert wurden, und zum Liefern des Ergebnisses als Ausgabe;
   ein Header-Register zum Speichern von MAC-hs-Headerinformationen; und
   eine MAC-hs-Steuervorrichtung zum: basierend auf der Datenlänge von Paketdaten von MAC-hs-PDU-Einheiten, die empfangen wurden als Eingabe und auf der RLC-PDU-Größe, die im Voraus gesetzt wurde, berechnen einer Padding-Bit-Anzahl, die enthalten ist in den Paketdaten von MAC-hs-PDU-Einheiten, die empfangen wurden als Eingabe und einer RLC-PDU-Anzahl, die die Anzahl von Einheiten von Paketdaten von RLC-PDU-Einheiten ist, die in den Paketdaten von MAC-hs-PDU-Einheiten enthalten sind; Liefern der Padding-Bit-Anzahl, die berechnet wurde als Ausgabe an die Padding-Bit-Eliminierungsvorrichtung; Liefern der RLC-PDU-Anzahl als Ausgabe an die RLC-PDU-Separierungsvorrichtung; Speichern von MAC-hs-Headerinformation von MAC-hs-Headerinformationen, die übertragen wurden von der MAC-hs-Header-Eliminierungsvorrichtung, die gehalten werden müssen in dem Header-Register in Übereinstimmung mit Sequenz-Nummer-Informationen, die berichtet wurden von der RLC-PDU-Separierungsvorrichtung, und Ausführen eines Umordnungsprozesses; Machen der Transfer-Zweckmäßigkeitsinformation "Transfer nicht möglich" für Paketdaten von RLC PDU-Einheiten, für die der Umordnungsprozess nicht vollständig durchgeführt wurde; Machen der Transfer- Zweckmäßigkeitsinformation "Transfer möglich" für Paketdaten von RLC-PDU-Einheiten, für die der Umordnungsprozess vollständig durchgeführt wurde, und Liefern dieser Paketdaten an die Steuervorrichtung für den gemeinsamen Speicher.

3. Eine mobile Radiokommunikationsterminal-Vorrichtung nach Anspruch 2, wobei:

die MAC-hs-Steuervorrichtung ausgerüstet ist mit einer Einrichtung um, wenn Paketdaten von RLC-PDU-Einheiten, für die eine Repeat-Anforderung in dem RLC-Layer übertragen wurde, einen Umordnungsprozess in dem MAC-Layer unterzogen werden, Ändern der Transfer-Zweckmäßigkeitsinformation von "Transfer nicht möglich" zu Transfer erlaubt" für die Paketdaten von RLC-PDU-Einheiten; und
wobei der RLC-Prozessor ausgerüstet ist mit einer Einrichtung zum Verhindern der Übertragung von Repeat-Anforderungen für Paketdaten von RLC-PDU-Einheiten, für die Transfer- Zweckmäßigkeitsinformation geändert wurde in "Transfer erlaubt" und zum Anfordern der Steuervorrichtung für den gemeinsamen Speicher nach Bedarf zum Übertragen der Paketdaten von RLC-PDU-Einheiten.

## Revendications

1. Dispositif terminal de communication radio mobile qui utilise une technologie d'accès par paquets de liaison descendante à grande vitesse, HSDPA, disposant d'une fonction de répétition dans la couche de commande d'accès au support, MAC, ledit dispositif terminal de communication radio mobile comprenant :

un processeur MAC à grande vitesse, MAC-hs, pour séparer les données de paquets des unités de données de protocole, PDU, MAC-hs pour lesquelles il est déterminé que le décodage est réussi dans un procédé de demande d'autorépétition hybride, HARQ, de couche 1 en données de paquets d'unités PDU de commande de liaison radio, RLC, ayant une longueur d'unité fixe, qui sont les unités de traitement de données dans la couche RLC ; et fournir ces données en tant que sorties avec des informations de nombre de séquences et des informations d'opportunité de transfert indiquant si un procédé de réorganisation des données de paquets qui ont été séparées en unités PDU RLC a été effectué ;
une mémoire partagée pour des blocs de données MAC et RLC, qui est une mémoire physique, pour fonctionner en tant qu'un tampon MAC-hs pour stocker des données de paquets d'unités PDU MAC-hs et un tampon RLC pour stocker des données de paquets d'unités PDU RLC ;
un dispositif de commande de mémoire partagée pour mettre en oeuvre une commande de mémoire pour : assigner des adresses de mémoire de ladite mémoire partagée à des unités PDU RLC à l'avance ; placer des adresses de mémoire qui ont été assignées en correspondance avec des nombres de séquences PDU RLC et attacher lesdits nombres de séquences PDU RLC en tant qu'étiquettes ; écrire des données de paquets d'unités PDU RLC qui ont été reçues en tant qu'entrées dudit processeur MAC-hs à des adresses de mémoire correspondantes de ladite mémoire partagée ; et lire et transférer des données de paquets dans ladite mémoire partagée uniquement lorsque lesdites informations d'opportunité de transfert depuis ledit processeur MAC-hs indiquent que le transfert est possible ; et
un processeur RLC pour effectuer un traitement de couche RLC sur des données de paquets qui ont été transférées dudit dispositif de commande de mémoire partagée et pour fournir le résultat en tant que sortie à la couche de commande de ressources radio, RRC.

2. Dispositif terminal de communication radio mobile selon la revendication 1, dans lequel :

ledit processeur MAC-hs comprend :

un dispositif d'élimination d'en-tête MAC-hs pour supprimer une partie d'en-tête MAC-hs des données de paquets des unités PDU MAC-hs qui ont été reçues en tant qu'entrées et fournir en tant que sorties les informations d'en-tête MAC-hs qui ont été supprimées et les données de paquets restantes desquelles les entêtes MAC-hs ont été supprimés ;
un dispositif d'élimination de bits de remplissage pour supprimer les bits de remplissage des données de paquets qui ont été fournies en tant que sorties dudit dispositif d'élimination d'en-tête MAC-hs sur la base d'un nombre de bits de remplissage qui a été rapporté à l'avance et fournir en tant que sorties les données de paquets restantes desquelles les bits de remplissage ont été supprimés ;

un dispositif de séparation PDU RLC pour séparer des données de paquets qui ont été fournies en tant que sorties dudit dispositif d'élimination de bits de remplissage en une pluralité de données de paquets d'unités PDU RLC sur la base d'un nombre de PDU RLC qui a été rapporté à l'avance et à la fois fournir en tant que sorties la pluralité de données de paquets d'unités PDU RLC qui ont été séparées au dit dispositif de commande de mémoire partagée et reconnaître les informations de nombre de séquences sur la base des informations d'en-tête de chaque élément de données de paquets d'unités PDU RLC qui ont été séparées et fournir le résultat en tant que sortie ;

un registre d'en-tête pour stocker les informations d'en-tête MAC-hs ; et

un dispositif de commande MAC-hs pour : sur la base de la longueur de données des données de paquets d'unités PDU MAC-hs qui ont été reçues en tant qu'entrées et de la taille de PDU RLC qui a été fixée à l'avance, calculer un nombre de bits de remplissage qui est contenu dans lesdites données de paquets d'unités PDU MAC-hs qui ont été reçues en tant qu'entrées et un nombre de PDU RLC, qui est le nombre d'éléments de données de paquets d'unités PDU RLC qui sont contenus dans les données de paquets d'unités PDU MAC-hs ; fournir ledit nombre de bits de remplissage qui a été calculé en tant que sortie au dit dispositif d'élimination de bits de remplissage ; fournir ledit nombre de PDU RLC en tant que sortie au dit dispositif de séparation de PDU RLC ; parmi les informations d'entête MAC-hs qui ont été transmises dudit dispositif d'élimination d'en-tête MAC-hs, stocker les informations d'en-tête MAC-hs qui doivent être contenues dans ledit registre d'en-tête en correspondance avec les informations de nombre de séquences qui ont été rapportées dudit dispositif de séparation PDU RLC et effectuer un procédé de réorganisation ; rendre ledit transfert d'informations d'opportunité de transfert impossible pour les données de paquets d'unités PDU RLC pour lesquelles le procédé de réorganisation n'a pas été effectué ; rendre ledit transfert d'informations d'opportunité de transfert possible pour les données de paquets d'unités PDU RLC pour lesquelles le procédé de réorganisation a été effectué, et fournir ces données de paquets au dit dispositif de commande de mémoire partagée.

3. Dispositif terminal de communication radio mobile selon la revendication 2, dans lequel :

ledit dispositif de commande MAC-hs est pourvu d'un moyen pour, lorsque des données de paquets d'unités PDU RLC pour lesquelles une demande de répétition a été transmise dans la couche RLC subissent un procédé de réorganisation dans la couche MAC, changer les informations d'opportunité de transfert depuis transfert impossible à transfert permis pour les données de paquets d'unités PDU RLC ; et

ledit processeur RLC est pourvu d'un moyen pour empêcher la transmission de demandes de répétition pour des données de paquets d'unités PDU RLC pour lesquelles lesdites informations d'opportunité de transfert ont été changées à transfert permis et demander que ledit dispositif de commande de mémoire partagée soit nécessaire pour le transfert des données de paquets d'unités PDU RLC.

# Fig. 1

PRIOR ART

MAC−hs PDU

| MAC−hs header | MAC−hs payload |
|---|---|

| VF | queue ID | TSN | SID | N | F |
|---|---|---|---|---|---|

| MAC-hs SDU | MAC-hs SDU | ⌇ | MAC-hs SDU | P bits |
|---|---|---|---|---|

| MAC header | MAC SDU (RLC PDU) |
|---|---|

EP 1 612 984 B1

# F i g . 2

# P R I O R  A R T

padding bits

| MAC-hs header | RLC PDU | RLC PDU | RLC PDU | RLC PDU | RLC PDU | RLC PDU | P bits |
|---|---|---|---|---|---|---|---|

MAC-hs PDU

MAC-hs processor

101d MAC-hs control device

header register

101e

101

101a MAC-hs header elimination device

101b padding bit elimination device

101c RLC PDU separation device

layer 1 HARQ

103 shared memory

shared memory control device

102

RRC layer

RLC function processor

104

104a

RLC control device

104b

RLC processor

EP 1 612 984 B1

F i g . 4

| SN | leading memory address |
|----|------------------------|
| 0 | 0 |
| 1 | 1*RLC PDU length |
| 2 | 2*RLC PDU length |
| 3 | 3*RLC PDU length |
| 4 | 4*RLC PDU length |
| 5 | 5*RLC PDU length |
| 6 | 6*RLC PDU length |
| . | . |
| . | . |
| . | . |
| m−1 | (m−1)*RLC PDU length |

Fig. 5

| SN | leading memory address |
|---|---|
| m | 0 |
| m+1 | 1*RLC PDU length |
| m+2 | 2*RLC PDU length |
| m+3 | 3*RLC PDU length |
| m+4 | 4*RLC PDU length |
| m+5 | 5*RLC PDU length |
| m+6 | 6*RLC PDU length |
| . | . |
| m+n−1 | (n−1)*RLC PDU length |
| . | . |
| m−1 | (m−1)*RLC PDU length |

Fig. 6

| SN | leading memory address |
|---|---|
| m | 0 |
| m+1 | 1*RLC PDU length |
| m+2 | 2*RLC PDU length |
| m+3 | 3*RLC PDU length |
| m+4 | 4*RLC PDU length |
| m+5 | 5*RLC PDU length |
| m+6 | 6*RLC PDU length |
| . | . |
| M | (n−3)*RLC PDU length |
| 0 | (n−2)*RLC PDU length |
| 1 | (n−1)*RLC PDU length |
| . | . |
| m−1 | (m−1)*RLC PDU length |

F i g . 7

MAC – hs SDU

| C/T | RLC PDU |

padding bits

| MAC – hs header | RLC PDU | RLC PDU | RLC PDU | RLC PDU | RLC PDU | RLC PDU | P bits |

MAC-hs PDU

# F i g. 8

MAC-hs buffer

| 3 | | 4 | 5 | 7 | 8 | | 6 | 2 |

← 9 ← 2

# F i g. 9

MAC-hs buffer

| 3 | | 4 | 5 | 7 | 8 | | 6 | 2 |

← 9 ← 2

# F i g. 1 0

MAC-hs buffer

| 3 | 9 | 4 | 5 | 7 | 8 | 9 | 6 | 2 |

← 2

# F i g. 1 1

MAC-hs buffer

| | | 2 | 3 | 4 | 5 | 6 | 7 | 8 |

← 9 ← 2

**EP 1 612 984 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002026991 A
- JP 2003318800 A
- WO 2004015906 A2